# EUROPÄISCHE PATENTSCHRIFT

(11) **EP 1 896 838 B1**
(45) Veröffentlichungstag und Bekanntmachung des Hinweises auf die Patenterteilung: **10.01.2018**
(21) Anmeldenummer: 06777466.1
(22) Anmeldetag: 27.06.2006
(51) Int. Cl.: G01N 27/04, G01N 15/06

(54) **SENSOR UND BETRIEBSVERFAHREN ZUR DETEKTION VON RUß**
SENSOR AND OPERATING METHOD FOR DETECTING SOOT
CAPTEUR ET PROCEDE D'UTILISATION POUR LA DETECTION DE SUIES

(30) Priorität: 28.06.2005 DE 102005030134
(43) Veröffentlichungstag der Anmeldung: 12.03.2008
(73) Patentinhaber: Continental Automotive GmbH, 30165 Hannover (DE)
(72) Erfinder: FLEISCHER, Maximilian, 85635 Höhenkirchen (DE); POHLE, Roland, 85570 Herdweg (DE); WIESNER, Kerstin, 85640 Putzbrunn (DE)
(86) Internationale Anmeldenummer: PCT/EP2006/063570
(87) Internationale Veröffentlichungsnummer: WO 2007/000446

(56) Entgegenhaltungen:
- WO-A-2005/015192
- WO-A-2005/121761
- DE-A1- 10 353 860
- JP-A- H1 194 784
- US-A- 4 307 061
- US-A- 4 656 832
- US-A1- 2003 196 499
- HORN P ET AL: "Measurement of the degree of contamination in combustion gases of oil heatings" TECHNISCHES MESSEN TM, R.OLDENBOURG VERLAG. MUNCHEN, DE, Bd. 52, Nr. 4, April 1985 (1985-04), Seiten 154-159, XP002135508 ISSN: 0171-8096

## Beschreibung

Die Erfindung betrifft einen Sensor und ein Betriebsverfahren dazu für die Detektion von Ruß in einem Messgasvolumen. Betrachtet werden sowohl die Feststellung, ob Ruß im Messgas vorhanden ist als auch dessen Konzentration.

Die Kohlendioxid-Anreicherung in der Atmosphäre wird heutzutage vielseitig diskutiert. Damit verbunden ist die Tatsache, dass die Verfügbarkeit fossiler Energieträger begrenzt ist. Als Reaktion darauf werden beispielsweise Verbrennungsprozesse thermodynamisch optimiert, so dass sie im Wirkungsgrad verbessert sind. Im Kraftfahrzeugbereich schlägt sich dies in der zunehmenden Verwendung von Dieselfahrzeugen nieder. Der Nachteil dieser Verbrennungstechnik ist gegenüber optimierten Otto-Motoren jedoch ein deutlich erhöhter Ausstoß von Ruß. Zusätzlich kann dessen Bildung durch verbrennungstechnische Maßnahmen kaum verhindert werden. Der Ruß ist besonders durch die Anlagerung polyzyklischer Aromate (PAK) stark krebserregend, worauf in verschiedenen Vorschriften bereits reagiert wurde. So sind beispielsweise Abgas-Emissionsnormen im europäischen Verband mit Höchstgrenzen für die Rußemission verbunden. Daher besteht die Notwendigkeit eine preisgünstige Sensorik anzugeben, die den Rußgehalt in Abgasen misst.

Der Einsatz derartiger Rußsensoren kann sowohl für die Messung des aktuell ausgestoßenen Rußes benutzt werden, damit dem Motormanagement in einem Automobil in einer aktuellen Fahrsituation Informationen zukommen, um mit regelungstechnischen Anpassungen Emissionen zu reduzieren, als auch eine aktive Abgasreinigung durch so genannte Abgas-Rußfilter vorgenommen werden. Im letzteren Fall werden regenerierbare Filter verwendet, die einen wesentlichen Teil des Rußgehaltes aus dem Abgas herausfiltern. Benötigt werden Rußsensoren für die Detektion von Ruß, um die Funktion der Rußfilter zu überwachen, bzw. um deren Regenerationszyklen zu steuern.

Im Stand der Technik hat es verschiedene Ansätze zu Detektion von Ruß gegeben. Ein in Laboratorien weithin verfolgter Ansatz besteht in der Verwendung der Lichtstreuung durch die Rußpartikel. Diese Vorgehensweise eignet sich für aufwändige Messgeräte. Wo versucht wird, dies auch als mobiles Sensorsystem im Abgas einzusetzen, muss festgestellt werden, dass derartige Ansätze zur Realisierung eines kostengünstigen Sensors in einem Kraftfahrzeug durch den aufwändigen optischen Aufbau mit hohen Kosten verbunden ist. Weiterhin bestehen ungelöste Probleme bezüglich der Verschmutzung der benötigten optischen Fenster durch Verbrennungsabgase.

In der deutschen Offenlegungsschrift DE 199 59 871 A1 werden ein Sensor und Betriebsverfahren beschrieben, die beide auf thermischen Betrachtungen basieren. Der Sensor besteht aus einem offen porösen Formkörper wie beispielsweise einer wabenförmigen Keramik, einem Heizelement und einem Temperaturfühler. Wird der Sensor mit einem Messgasvolumen in Verbindung gebracht, so lagert sich Ruß darauf ab. Zur Messung wird der in einem Zeitraum abgelagerte Ruß mit Hilfe des Heizelementes zum Zünden gebracht und verbrannt. Die bei der Verbrennung entstehende Temperaturerhöhung wird gemessen. Obwohl dies in konstanten Umgebungsbedingungen eine praktikable Vorgehensweise ist, stellt sich unter den Bedingungen eines Kraftfahrzeug-Abgastraktes mit stark fluktuierenden Strömungen und Abgastemperaturen die Messung der relativ kleinen Temperaturerhöhung als äußerst schwieriges Problem dar.

Prinzipiell können zwei Verfahren zur Rußmessung eingesetzt werden. Eines beruht auf einem elektrischen Feld zwischen zwei Elektroden an denen das Messgasvolumen, das mit Ruß beladen ist, vorhanden ist, wobei der Ruß einen Ionisationsstrom verursacht. Eine Ausführung dieses Prinzips ist bekannt aus der deutschen Offenlegungsschrift DE 102 44 702 A. In diesem Fall passiert der Abgasstrom zwei Elektroden, die mit einer elektrischen Isolationsschicht versehen sind und zwischen denen sich das zu untersuchende rußhaltige Gas befindet. Die Elektroden werden mit einer Wechselspannung zwischen 1 und 10 kV betrieben. Zwischen den Elektroden wird in Abhängigkeit der Rußkonzentration im Messgas eine dielektrisch behinderte Entladung vorgenommen und die auftretenden Ströme gemessen. Für den Kfz-Betrieb ist dieses Verfahren insofern nicht praktikabel als die Realisierung hohe Spannungen und aufwändige Messtechnik erfordert. Zum anderen werden die wechselnden gasförmigen Abgasbestandteile eine wesentliche Messverfälschung durch Störgasbeeinflussung des Ionisationsstroms mit sich bringen.

Die US 2003/196499 A1 offenbart einen Sensor mit einem keramischen Substrat mit einer elektrisch nichtleitenden Oberfläche sowie eine auf der Substratoberfläche ausgebildeten Elektrodenstruktur. An dem Substrat weist der Sensor eine Heizung auf und eine Temperaturmessvorrichtung.

Der Erfindung liegt die Aufgabe zugrunde, einen Sensor und Betriebsverfahren bereit zu stellen, mittels derer die Detektion von Ruß möglich ist, wobei die Detektion schnell und reproduzierbar aufnehmbar ist.

Die Lösung dieser Aufgabe geschieht durch die jeweilige Merkmalskombination der Ansprüche 1 oder 12. Vorteilhafte Ausgestaltungen können den Unteransprüchen entnommen werden.

Der Erfindung liegt die Erkenntnis zugrunde, dass durch den Einsatz eines die dielektrische Oberflächenleitfähigkeit messenden Sensors mittels beispielsweise zweier Elektroden eine auf der Oberfläche abgelagerte Menge von Ruß detektierbar ist. Durch eine flächige Ausbildung des Sensors können bereits geringe Leitfähigkeitsänderungen erkannt werden, wenn sich beispielsweise ein Rußfilm auf der Oberfläche ausbildet.

Dabei ist es besonders vorteilhaft, wenn fein verteilte und sich nicht berührende elektrisch leitende Partikel zwischen den Messelektroden angesiedelt werden, was dazu führt, dass eine messbare Leitfähigkeit bereits bei erheblich reduzierter Rußmenge bzw. Filmdicke auftritt.

Vorteile hinsichtlich der Generierung eines Messsignals bietet eine Interdigitalstruktur der Messelektroden. Eine derartige Struktur ist etwa wie zwei ineinander geschobene kammartige Gebilde ausgeführt.

Wird ein Widerstandssensor entsprechend der Erfindung doppelt oder mehrfach ausgebildet, so kann sichergestellt werden, dass sich aufgrund notwendiger Regenerierungsphasen dennoch jederzeit ein Sensor in einer Messphase befindet.

Zum Schutz des Sensors insbesondere der Messelektroden oder auch des Temperaturfühlers bzw. der Heizung werden dünne Beschichtungen aufgebracht, die beispielsweise fein porös sind, um - trotz der Schutzwirkung - eine Messgasströmung zuzulassen, oder die Beschichtungen werden so ausgebildet, dass sie selber eine ausreichende elektrische Leitfähigkeit aufweisen, so dass durch den von der Beschichtung erzeugten elektrischen Widerstand keine unzulässige Verfälschung des Sensorsignals erzeugt wird.

Zum Aufbau des Sensors hinsichtlich einer sicheren Signalgenerierung ist es sehr vorteilhaft, eine elektrisch hoch isolierende Schicht auf ein in der Regel ebenfalls isolierendes Substrat aufzubringen. Die hoch isolierende Schicht kann zugleich abgasstabil ausgeführt werden.

Es ist möglich, auf der Substratoberfläche bzw. auf der darauf aufgebrachten Schicht einen Oxidationskatalysator zu positionieren. Dieser wird in der Regel in Form einer Dispersion geschichtet, also in nicht zusammenhängender Form aufgebracht werden.

Zur Einsparung von Bauelementen am Sensor kann die Widerstandsheizung gleichzeitig als Temperatursensor betrieben werden. Diese wird vorzugsweise allein oder mit einem Temperaturfühler mit einer Schutzschicht überzogen oder in einem Mehrschichtaufbau im Inneren des Sensorkörpers montiert.

Als Grundlage für die Verwendung eines Nullwiderstands als Ausgangspunkt für Widerstandsmessungen ist es vorteilhaft, die Substratoberfläche derart auszulegen, dass sie einen definierten Grundleitwert aufweist. In Verbindung mit dem Nullwiderstand kann die elektrische Funktionsfähigkeit des Sensors in einer Selbstüberwachungs-Einheit oder -Abfrage ermittelt werden.

Ein beschriebener Rußsensor wird beheizt, so dass in einer Messphase die Betriebsbedingungen derart eingestellt sind, dass Bestandteile, die Störsignale verursachen können, sich nicht zusätzlich zum Ruß auf der Oberfläche niederschlagen. Bei abgeschlossener Messung setzt eine Regenerationsphase bei erhöhter Temperatur ein. Je nach Anwendungsfall kann eine mit mindestens zwei verschiedenen Temperaturen betriebene Variante eingesetzt werden, so dass der Sensor getrennt misst und regeneriert, oder der Sensor wird auf einer Temperatur gehalten, bei der ein dynamisches Gleichgewicht zwischen Messen und Regenerieren vorliegt. Dies bedeutet, dass das Temperaturniveau in Verbindung mit einer definierten katalytischen Aktivität der Oberfläche eine kontinuierliche Verbrennung des Rußes durch im Abgas vorhandenen Sauerstoff ablaufen lässt, bei gleichzeitiger Messung des Widerstands für die Rußbelegung, die sich dynamisch einstellt. Entsprechend der Rußbelegung wird zwischen den Elektroden eine erhöhte elektrische Leitfähigkeit gemessen werden. Die Darstellung des Messsignals kann auf der Leitfähigkeit direkt basieren oder kann über die Temperaturmessung ermittelt werden, wobei dann die Leitfähigkeit auf einen konstanten Wert geregelt wird. Unter Verwendung einer Substratoberfläche, die einen Nullwiderstand zur Verfügung stellt, lässt sich in vorteilhafter Weise eine Selbstüberwachung des Sensors einrichten.

Im Folgenden werden anhand von schematischen die Erfindung nicht einschränkenden Figuren Ausführungsbeispiele beschrieben:
- Figur 1: zeigt die Ausgestaltung für einen erfindungsgemäßen Rußfilter,
- Figuren 2 und 3: zeigen schematisch jeweils einen Querschnitt durch einen erfindungsgemäßen Rußfilter, wobei die elektrische Auswertung angedeutet ist,
- Figur 4: zeigt eine Ausgestaltung der Erfindung zur Verbesserung des Ansprechverhaltens durch fein verteilte leitfähige Partikel auf der Sensoroberfläche,
- Figur 5: zeigt eine Anordnung zur Erhöhung der Sensitivität durch Verbesserung der elektrischen Isolation mittels einer auf dem Substrat abgeschiedenen Isolationsschicht,
- Figur 6: zeigt ein Diagramm mit Leitfähigkeitsmessungen an einem erfindungsgemäßen Rußsensor.

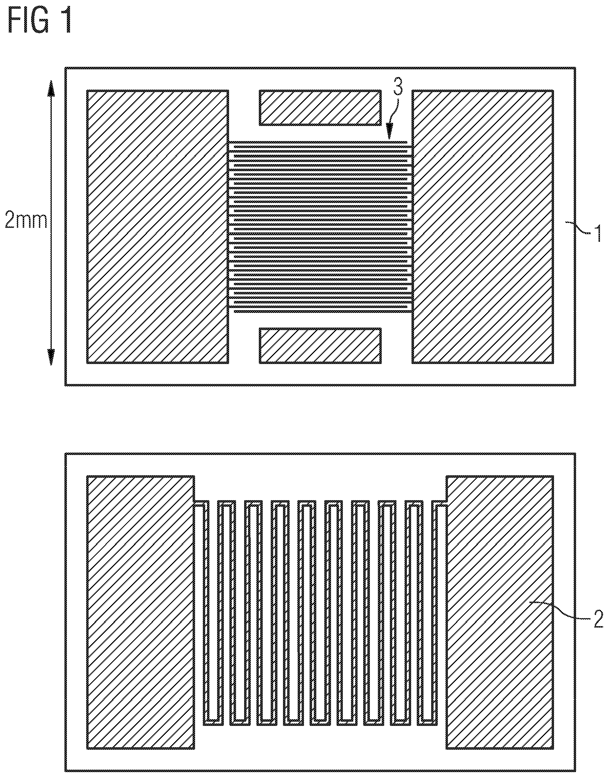

In Figur 1 wird in der oberen Hälfte zwischen zwei großflächigen Anschlussflächen eine interdigital ausgebildete und somit kammartige Struktur von Elektroden 3 dargestellt. Auf dem Substrat 1, das in der Regel ein Keramiksubstrat ist, befindet sich einerseits diese Messstruktur und auf der gegenüberliegenden Seite die in der unteren Hälfte der Figur 1 dargestellte mäanderförmige Struktur einer Heizung 2.

Ein Rußsensor kann aus einem keramischen Grundkörper bestehen, der mit einem rußhaltigen Gas zumindest an seiner Oberfläche beaufschlagt wird, wobei eine vorgegebene elektrisch isolierende oder elektrisch schwach leitende Eigenschaften aufweisende Oberfläche eine katalytische Wirkung hinsichtlich des abgeschiedenen Rußes besitzt. Am Sensor ist eine Temperaturmessung über einen Temperaturfühler vorgesehen. Wenn sich Ruß aus dem rußhaltigen Abgas auf der Oberfläche abscheidet, wird die durch den abgeschiedenen Ruß hervorgerufene elektrische Leitfähigkeit zwischen den Elektroden gemessen und damit die Anwesenheit von Ruß bzw. einem Rußfilm detektiert.

Ein erstes mögliches Betriebsverfahren besteht darin, den Sensor auf konstanter erster Temperatur zu halten, die beispielsweise im Bereich von 250 - 450 °C liegt. Dadurch wird verhindert, dass sich unerwünschte andere Abgasbestandteile wie Feuchtigkeit, Stickoxide oder Schwefeldioxid, welche auch eine elektrische Leitfähigkeit auf der Oberfläche verursachen können, auf dieser Oberfläche ablagern. Die Ablagerung von Rußpartikeln wird selbstverständlich stattfinden, wobei die Messphase des Sensors an einem bestimmten zeitlichen Nullpunkt beginnt und bei einem vorgegebenen bis dahin erreichten Leitwert zwischen den Elektroden endet. Dies begründet sich darauf, dass mit zunehmender Zeit eine zunehmende Ablagerung von Rußpartikeln an der Oberfläche des Sensors eine elektrische Leitfähigkeit auf der Oberfläche des Sensors erzeugen, die messbar ist. In dieser ersten Phase des Sammelns von Rußpartikeln wird die Zeit bis zum Auftreten der erhöhten Leitfähigkeit gemessen und dient als Maß für eine mittlere Belastung des Messgases mit Ruß. Bei Überschreitung einer bestimmten Leitfähigkeit zwischen den Elektroden wird das Sensorelement auf eine definierte zweite Temperatur aufgeheizt, die typischerweise zwischen 500 und 800 °C liegt. Auf diesem Temperaturniveau werden die Rußpartikeln mit dem im Abgas vorhandenen Sauerstoff verbrannt, wodurch die Regenerationsphase dargestellt wird. Im Anschluss an die Regenerationsphase beginnt die nächste Messphase. Typische Werte für die Zeitintervalle sind -> für die Messphase beispielsweise 30 - 300 s und -> für die Regenerationsphase beispielsweise 10 - 40 s. Die Größen sind abhängig von der Art und der Dauer der Rußbeaufschlagung.
Eine vorteilhafte Betriebsvariante sieht vor, dass mindestens zwei Sensorelemente vorgesehen sind, wobei sich immer mindestens ein Sensorelement in der Messphase befindet und somit eine kontinuierliche, d.h. unterbrechungsfreie Messung sichergestellt wird. Ein anderes Betriebsverfahren, welches kein Ausführungsbeispiel der vorliegenden Erfindung ist, sieht vor, dass der Sensor auf konstanter Temperatur betrieben wird, die bei im Bereich von 350 und 500 °C liegt. Durch dieses höhere Temperaturniveau wird zum einen verhindert, dass sich Feuchtigkeit, Stickoxide und Schwefeldioxid ablagern, wodurch Störsignale erzeugt werden könnten. Die Ablagerung von Rußpartikeln kann jedoch stattfinden. Durch die erhöhte Temperatur im Verhältnis zur ersten Temperatur beim ersten Betriebsverfahren wird in Verbindung mit einer vorgegebenen katalytischen Aktivität der Oberfläche nun eine kontinuierliche Verbrennung des Rußes durch im Abgas vorhandenen Sauerstoff auch während der Messphase vorliegen, so dass sich eine der Rußbelastung des Gases entsprechende Rußbelegung an der Oberfläche dynamisch einstellt. Entsprechend der Rußbelegung der Oberfläche wird zwischen den beiden Elektroden eine erhöhte Leitfähigkeit gemessen. Für die Rußbelegung im dynamischen Gleichgewicht zwischen Rußabscheidung und katalytischer Verbrennung sind Temperatur und katalytische Aktivität ausschlaggebend. Das Ausgangssignal des Sensors wird nun entweder durch die jeweilige erhöhte Leitfähigkeit dargestellt oder es wird die Temperatur des Sensorelementes so geregelt, dass eine konstante erhöhte Leitfähigkeit erreicht wird, wobei dann die benötigte Temperatur das Messsignal darstellt.

Der Sensor besteht in der Regel aus einem keramischen Grundkörper, beispielsweise aus Aluminiumoxid mit nicht näher spezifizierter Leitfähigkeit. Auf der dem Messgas ausgesetzten Oberfläche ist der vorzugsweise mit einer elektrisch hoch isolierenden Schicht beschichtet. Auf dieser Schicht werden die Messelektroden angebracht. Dadurch wird eine sehr gute elektrische Isolierung der Elektroden erreicht und es können schon kleine elektrische Leitfähigkeiten durch Rußbelegungen detektiert werden. Als Materialien für die Isolationsschicht ist eine elektrisch sehr gut isolierende Keramikschicht, beispielsweise hoch reines Al₂O₃, oder AlN mit typischen Schichtdicken von 10 - 100 µm vorgesehen. Es kann auch eine hoch isolierende Schicht aus SiO₂ oder Si₃N₄ mittels eines Verfahrens wie Sputtern oder CVD aufgebracht werden.

Zum Schutz des Sensors oder von Teilbereichen desselben kann eine Schicht angebracht werden, die abgasstabil ist. Es ist auch möglich, eine Oberfläche des Sensors bereitzustellen, die eine definierte Grundleitfähigkeit aufweist. In diesem Fall wird bei dem Sensorelement ohne Rußablagerung ein definierter Nullwiderstand gemessen. Dies ist messtechnisch von Vorteil, da ein undefinierter hoher Widerstand im Sensorbetrieb schwer erfassbar ist. Angewandt wird dies zu einer Erweiterung des Betriebsverfahrens, bei dem ohne Rußabscheidung das Vorliegen des Nullwiderstands die elektrische Funktionsfähigkeit des Sensors anzeigt. Dies ermöglicht eine Selbstüberwachung. Geeignete Materialien für eine abgasstabile, halbleitende Schicht sind beispielsweise Metalloxide wie Ga₂O₃, CeO₂ oder HfO₂.

Zur Unterstützung der Regenerierung in der ersten Betriebsverfahrens-Variante bzw. zur Unterstützung des katalytischen Abbrands des Rußes in der zweiten Betriebsverfahrens-Variante wird der Oberfläche des Sensors eine katalytische Aktivität zur Oxidation von an der Oberfläche abgelagertem Ruß zu flüchtigen Gaskomponenten gezielt zugeordnet. Dies geschieht durch Aufbringung eines Oxidationskatalysators auf die Oberfläche der Schicht in Form einer Dispersion. Die Dispersion liefert nicht zusammenhängende Gebiete, damit die in der Regel leitfähigen Katalysatormaterialien keine unerwünschten Leitfähigkeiten zwischen den Elektroden bewirken können, was das Messsignal verfälschen würde. Materialien für derartige Katalysatoren sind beispielsweise Platinmetalle wie Pt, Rh, Pa bzw. deren Legierungen. Es können auch katalytisch aktive Oxide von Nebengruppen-Metalle wie beispielsweise Fe₂O₃, CeO₂, MnO₂, Cr₂O₃ oder HfO₂ verwendet werden.

Durch Aufbringung fein verteilter, sich nicht berührender elektrischer Partikel zwischen den Messelektroden kann die zum Erreichen einer messbaren Leitfähigkeit nötige Rußmenge erheblich reduziert werden.

Das Heizelement besteht aus einer metallischen Leiterbahn, z. B. aus Platin oder Platinmetallen oder deren Legierungen. In diesem Fall ist der Heizwiderstand eine Funktion der Temperatur des Sensorelementes und durch Auswertung des aktuellen Widerstands des Heizelementes kann die Temperatur bestimmt werden. In diesem Fall wirkt das Heizelement als Temperaturfühler. Für die Funktionsweise des Sensors ist die präzise Kenntnis der Temperatur erforderlich. Um die Heizung und/oder den Temperaturfühler vor einer Alterung durch Umgebungseinflüsse zu schützen, wird dieser vor Kontakt mit der Umgebung weitestgehend bewahrt. Dies geschieht entweder, indem eine Abdeckschicht aufgebracht wird, beispielsweise aus hoch schmelzenden Materialien wie Glas, Aluminiumoxid, Siliziumdioxid oder einer Kombination daraus oder die Bauteile werden im Inneren eines Trägers angebracht, wie beispielsweise anhand der Einbettung dieser Elemente in einem Mehrschichtaufbau.

Die Messelektroden 3 bestehen beispielsweise aus abgasstabilen Metallen wie Pt, Rh, Legierungen aus Platinmetallen, Chrom- und Nickellegierungen oder auch abgasstabilen, elektrisch leitfähigen Verbindungen wie z. B. Titannitrit/TiN, Bornitrit/BN, Siliziumcarbid/SiC, Borcarbit/B₄C oder Wolframsilizid/WSi₂ oder auch aus Platinsilizid/PtSi. Die Messelektroden können zur Erhöhung der Stabilität im Abgas mit dünnen Beschichtungen versehen sein. Diese Beschichtung ist so dünn oder aber fein porös, dass sie keine störende elektrische Isolation verursacht. Reduziert wird jedoch der chemische Angriff korrosiver Abgasbestandteile auf das Elektrodenmaterial. Geeignete Materialien für die Schichten sind beispielsweise abgasstabile, aber bei erhöhten Temperaturen halbleitende Metalle wie Galliumoxid oder Ceroxid oder sehr dünnen Schichten aus Siliziumoxid oder Aluminiumdioxid.

Vorteile der Erfindung sind insbesondere, dass ein kompakter, einfacher und damit kostengünstiger Aufbau mit entsprechenden Betriebsverfahren zur Bestimmung des Rußgehaltes in Abgasen zur Verfügung gestellt wird. Der Aufbau ist aus Materialien konstruiert, die ihm die benötigte Beständigkeit und Dauerstandfestigkeit für aggressive und korrosive Umgebungsbedingungen wie beispielsweise Abgasumgebung verleihen. Der Sensor ist zur kontinuierlichen Überwachung der Abgase geeignet und benötigt keinerlei Wartung oder sich verbrauchende Austauschteile. Durch das Dosimeterverfahren entsprechend der ersten Betriebsvariante mit zyklischer Ausbildung nimmt das Messprinzip direkt Bezug auf die Vorschriften der Abgasnorm EURO 5. Darin wird der Rußausstoß pro gefahrenen 100 km festgelegt.

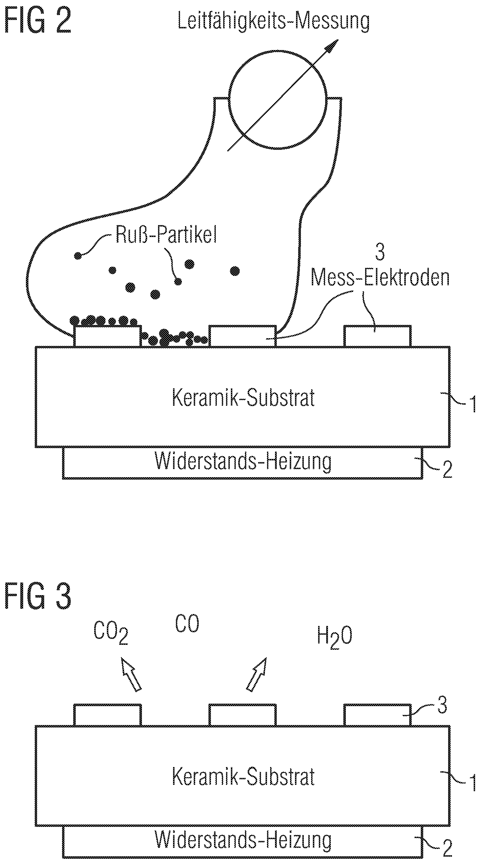

In Verbindung mit Figur 1 wird ein schematischer Querschnitt eines beschriebenen Sensors dargestellt, was auch auf die Figuren 2 und 3 zutrifft. Auf der Sensoroberseite sind die Messelektroden dargestellt. In der Messphase lagern sich die in der Gasphase vorhandenen Rußpartikel auf der Oberfläche ab und führen nach Bildung eines durchgehenden Strompfades zu einer messbaren Leitfähigkeit zwischen den Elektroden. In der Regenerierungsphase werden die abgelagerten Rußpartikel zu flüchtigen Gaskomponenten wie Kohlendioxid oder Feuchtigkeit oxidiert. Siehe hierzu Figur 3. Figur 2 zeigt eine Darstellung, bei der sich der Sensor in einer Messphase befindet. Entsprechend Figur 3 befindet sich der Sensor in der Regenerierungsphase.

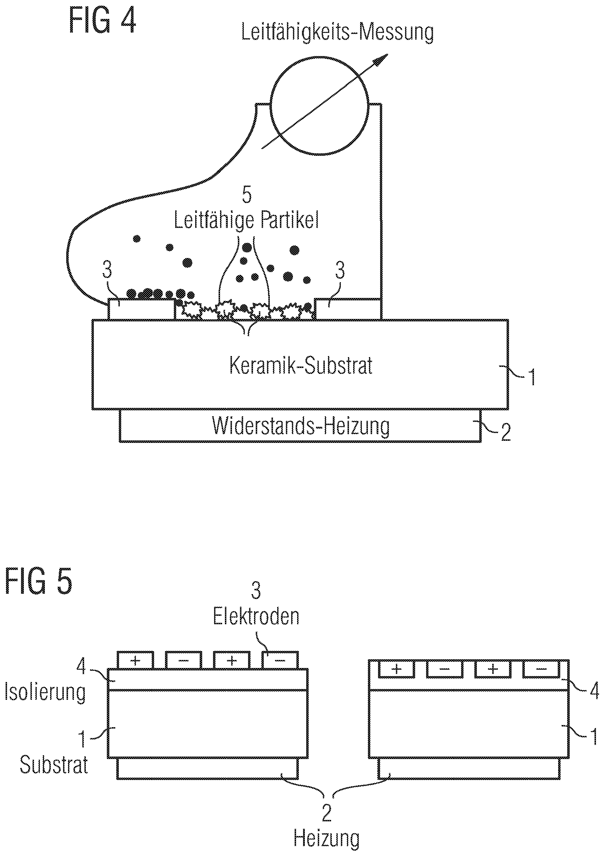

In der oben beschriebenen Variante ist zur Erzielung eines messbaren Signals die Ablagerung einer gewissen Anzahl von sich berührenden Rußpartikeln notwendig. Diese Zahl kann wesentlich verringert werden, indem zwischen die nach außen kontaktierte Messelektroden fein verteilte, leitfähige Partikel aufgebracht werden, die die Gesamtlänge der durch die Rußpartikel zu überbrückende Strecke auf einen Bruchteil reduzieren, wie es in Figur 4 dargestellt ist. Somit kann sowohl die zum Ansprechen des Sensors nötige Massenbelegung erheblich gesenkt werden als auch die Sensitivität auf kleine Partikel erhöht werden. Den kleinen Partikeln wird aufgrund ihrer erheblichen Gesundheit gefährdender Potentiale besondere Aufmerksamkeit geschenkt. Zusätzlich kann bei der Wahl eines geeigneten Sensormaterials für diese leitfähigen Partikel, z. B. Platin, die katalytische Aktivität der Oberfläche erhöhen und damit die Effektivität des Regenerationsvorgangs steigern. Dies ermöglicht eine Verringerung der Regenerationsdauer und/oder Regenerationstemperatur.

Eine Variante zur Erhöhung des Isolationsvermögens durch Aufbringen einer zusätzlichen Isolierschicht ist in Figur 5 dargestellt. Die Messelektroden liegen dabei entweder auf der Isolierschicht auf oder sind in diese eingebracht, so dass eine ebene Oberflächenstruktur zur bestmöglichen Messung eines dünnen Rußfilms entsteht. Somit können auch entsprechend der Ausbildung in der rechten Hälfte der Figur 5 Unterbrechungen der Leitfähigkeit durch den Ruß an vertikalen Kanten der Elektroden verhindert werden.

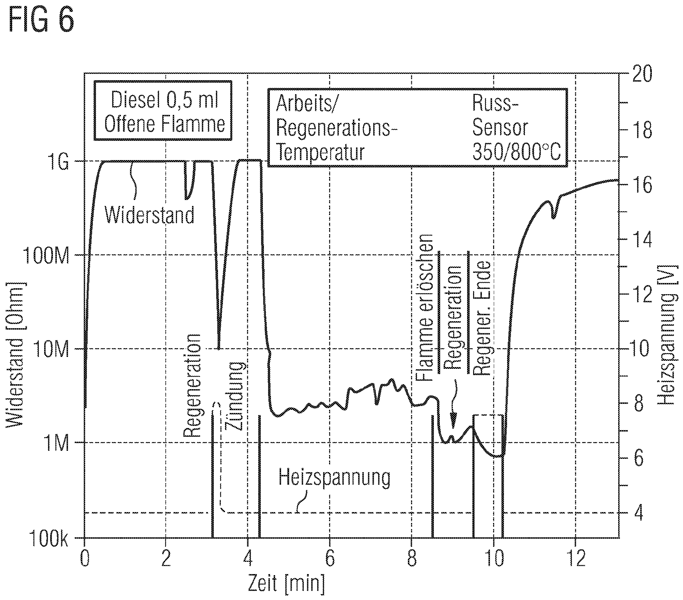

Eine Messung mit einem entsprechend Figur 1 aufgebauten Sensor ist in Figur 6 dargestellt. Im Verlauf der ersten Minute der Messung steigt der Widerstand des Sensors, da während der Aufheizphase auf 350°C desorbiert wird. Nach etwa 3 Minuten wird ein Regenerationsschritt bei 800°C durchgeführt. Hier kommt es zu einer Verringerung des Widerstands durch eine Eigenleitfähigkeit des Substrats. Nachdem der Sensor wieder seine Arbeitstemperatur von 350°C erreicht hat, wird nach 4,3 Minuten der Sensor dem Ruß einer offenen Dieselflamme ausgesetzt. Nur wenige Sekunden nach der Zündung fällt der Sensorwiderstand über mehrere Dekaden steil ab, wobei er noch während Ruß gebildet wird, einen stabilen Wert erreicht. Durch die Regeneration bei 800°C über 9,5 Minuten wird der auf der aktiven Sensorfläche befindliche Ruß zu flüchtigen gasförmigen Komponenten, vor allem Kohlendioxid verbrannt, so dass der Widerstand wieder seinen ursprünglichen Wert annimmt.

## Patentansprüche

1. Sensor zur Detektion von Ruß, der Folgendes aufweist:
- ein keramisches Substrat (1) mit einer einem Messgas ausgesetzten elektrisch nicht leitenden Oberfläche,
- eine auf der Substratoberfläche ausgebildete Elektrodenstruktur mit Elektroden (3) zur Messung der elektrischen Leitfähigkeit,
- einer an dem Substrat angebrachten Heizung (2) zur Einstellung einer Betriebstemperatur von 250 - 450 °C,
- mindestens eine Temperatur-Messvorrichtung,
- wobei durch Messung der Leitfähigkeit zwischen den Elektroden (3) vorhandene Rußablagerungen detektierbar sind,
**dadurch gekennzeichnet, dass** zwischen den Elektroden fein verteilte, nicht in Kontakt stehende elektrisch leitende Partikel auf der Substratoberfläche aufgebracht sind, um die zur Erzeugung einer messbaren Leitfähigkeit notwendigen Rußmenge zu reduzieren.

2. Sensor nach Anspruch 1, bei dem die Substratoberfläche katalytische Eigenschaften zur Verbrennung von Ruß besitzt.

3. Sensor nach einem der Ansprüche 1 oder 2, bei dem die Elektroden interdigital angeordnet sind.

4. Sensor nach einem der Ansprüche 1 bis 3, wobei der Sensor mit mindestens einem zweiten gleichartigen Sensor ausgeführt ist zum simultanen Einsatz.

5. Sensor nach einem der Ansprüche 1 bis 4, bei dem die Elektroden zur Erhöhung der Stabilität mit dünnen oder fein porösen Beschichtungen belegt sind.

6. Sensor nach einem der vorangehenden Ansprüche, bei dem das keramische Substrat zusätzlich mit einer elektrisch gut isolierenden Schicht versehen ist, die zugleich abgasstabil ist.

7. Sensor nach einem der vorangegangenen Ansprüche, bei dem auf dem Substrat oder auf einer darauf aufgebrachten elektrisch hoch isolierenden Schicht ein Oxidationskatalysator in Form einer Dispersion aufgebracht ist, so dass keine zusammenhängende Schicht vorliegt.

8. Sensor nach einem der vorangegangenen Ansprüche, bei dem die Heizung gleichzeitig als Temperatursensor betreibbar ist.

9. Sensor nach einem der vorangegangenen Ansprüche, bei dem die Heizung und/oder ein Temperaturfühler bei Oberflächenmontage mit einer Schutzschicht überzogen oder in einem Mehrschichtaufbau im Innern des Sensorkörpers montiert sind.

10. Sensor nach einem der vorangegangenen Ansprüche, bei dem die Substratoberfläche oder eine darauf aufgebrachte Schicht eine vorgegebene Grundleitfähigkeit aufweist, um einen Nullwiderstand zu definieren.

11. Verfahren zum Betrieb eines Sensors zur Detektion von Ruß in einem Messgasvolumen entsprechend einem der Ansprüche 1 bis 10 mit folgenden Schritten:
- Einstellen einer konstanten Betriebstemperatur am Sensor zur Einstellung eines dynamischen Gleichgewichts zwischen Messung und Regenerierung, so dass sich Ruß auf der Substratoberfläche ablagert und eine erhöhte Leitfähigkeit erzeugt und eine vorbestimmte katalytische Aktivität der Substratoberfläche eine kontinuierliche Verbrennung eines Rußanteils bewirkt und
- ein Messsignal auf der Grundlage der vorliegenden Leitfähigkeit generiert.

12. Verfahren nach Anspruch 11, bei dem ein Messsignal generiert wird, welches bei konstant gehaltener Leitfähigkeit auf der Grundlage von Temperaturänderungen basiert.

13. Verfahren nach einem der Ansprüche 11 bis 12, bei dem die Substratoberfläche einen definierten Nullwiderstand liefert, anhand dessen die elektrische Funktionsfähigkeit des Sensors zur Selbstüberwachung eingerichtet werden kann.

## Claims

1. Sensor for detecting soot, comprising the following:
- a ceramic substrate (1) having an electrically nonconductive surface exposed to a measurement gas,
- an electrode structure formed on the substrate surface and having electrodes (3) for measuring the electrical conductivity,
- a heating system (2) fitted to the substrate and serving for setting an operating temperature of 250-450°C,
- at least one temperature measuring device,
- wherein soot deposits present can be detected by measuring the conductivity between the electrodes (3),
**characterized in that**, between the electrodes, finely divided, electrically conductive particles which are not in contact are applied on the substrate surface in order to reduce the quantity of soot required for generating a measurable conductivity.

2. Sensor according to Claim 1, in which the substrate surface has catalytic properties for the combustion of soot.

3. Sensor according to either of Claims 1 and 2, in which the electrodes are arranged in interdigital fashion.

4. Sensor according to one of Claims 1 to 3, wherein the sensor is embodied with at least one second sensor of identical type, for simultaneous use.

5. Sensor according to one of Claims 1 to 4, in which the electrodes are covered with thin or finely porous coatings in order to increase the stability.

6. Sensor according to one of the preceding claims, in which the ceramic substrate is additionally provided with a layer which effects good electrical insulation and which is at the same time stable in respect of exhaust gas.

7. Sensor according to one of the preceding claims, in which an oxidation catalyst in the form of a dispersion is applied on the substrate or on an electrically highly insulating layer applied thereon, such that a continuous layer is not present.

8. Sensor according to one of the preceding claims, in which the heating system can simultaneously be operated as a temperature sensor.

9. Sensor according to one of the preceding claims, in which the heating system and/or a temperature sensor, in the case of surface mounting, are/is coated with a protective layer or mounted in a multilayer construction in the interior of the sensor body.

10. Sensor according to one of the preceding claims, in which the substrate surface or a layer applied thereon has a predetermined basic conductivity in order to define a zero resistance.

11. Method for operating a sensor for detecting soot in a measurement gas volume according to one of Claims 1 to 10, comprising the following steps:
- setting a constant operating temperature at the sensor for setting a dynamic equilibrium between measurement and regeneration, such that soot deposits on the substrate surface and generates an increased conductivity and a predetermined catalytic activity of the substrate surface brings about a continuous combustion of a soot component, and
- a measurement signal is generated on the basis of the conductivity present.

12. Method according to Claim 11, in which a measurement signal is generated which is based, given a conductivity that is kept constant, on the basis of temperature changes.

13. Method according to one of Claims 11 and 12, in which the substrate surface supplies a defined zero resistance on the basis of which it is possible to set up the electrical functionality of the sensor for self-monitoring.

## Revendications

1. Capteur pour la détection de suies, comprenant les éléments suivantes :
- un substrat céramique (1) ayant une surface électriquement non conductrice exposée à un gaz de mesure,
- une structure d'électrode réalisée sur la surface du substrat, comportant les électrodes (3) destinées à mesurer la conductivité électrique,
- un élément chauffant monté sur le substrat (2) destiné à régler une température de fonctionnement de 250-450°C,
- au moins un dispositif de mesure de température,
- dans lequel des dépôts de suies présents entre les électrodes (3) peuvent être détectés par mesure de la conductivité,
**caractérisé en ce que** des particules électriquement conductrices finement divisées non en contact entre les électrodes sont déposées sur la surface du substrat afin de réduire la quantité de suies nécessaire pour produire une conductivité mesurable.

2. Capteur selon la revendication 1, dans lequel la surface du substrat présente des propriétés catalytiques permettant la combustion des suies.

3. Capteur selon l'une quelconque des revendications 1 ou 2, dans lequel les électrodes sont disposées de manière interdigitée.

4. Capteur selon l'une quelconque des revendications 1 à 3, dans lequel le capteur est réalisé en association avec au moins un second capteur de même type destiné à être mis en oeuvre simultanément.

5. Capteur selon l'une quelconque des revendications 1 à 4, dans lequel les électrodes sont revêtues de revêtements poreux minces ou fins pour augmenter la stabilité.

6. Capteur selon l'une quelconque des revendications précédentes, dans lequel le substrat céramique est en outre pourvu d'une couche présentant une bonne caractéristique d'isolation électrique, qui est également stable vis-à-vis des gaz d'échappement.

7. Capteur selon l'une quelconque des revendications précédentes, dans lequel un catalyseur d'oxydation sous la forme d'une dispersion est déposé sur le substrat ou sur une couche fortement isolante électriquement déposée sur ce dernier, de manière à ce qu'aucune couche d'un seul tenant ne soit présente.

8. Capteur selon l'une quelconque des revendications précédentes, dans lequel l'élément chauffant peut être simultanément mis en fonctionnement en tant que capteur de température.

9. Capteur selon l'une quelconque des revendications précédentes, dans lequel l'élément chauffant et/ou un capteur de température sont revêtus d'une couche de protection ou d'une structure multicouche lors du montage en surface ou sont montés dans une structure multicouche à l'intérieur du corps du capteur.

10. Capteur selon l'une quelconque des revendications précédentes, dans lequel la surface du substrat ou une couche déposée sur celle-ci présente une conductivité de base prédéterminée afin de définir une résistance nulle.

11. Procédé de mise en fonctionnement d'un capteur pour la détection de suies dans un volume de gaz de mesure selon l'une quelconque des revendications 1 à 10, comportant les étapes consistant à :
- régler une température de fonctionnement constante au niveau du capteur afin d'établir un équilibre dynamique entre la mesure et la régénération, de manière à ce que des suies se déposent sur la surface du substrat et à générer une conductivité plus élevée et à ce qu'une activité catalytique prédéterminée de la surface du substrat provoque une combustion continue d'une part de suie, et
- génère un signal de mesure en fonction de la conductivité présente.

12. Procédé selon la revendication 11, dans lequel un signal de mesure qui a pour base des variations de température est généré pour une conductivité maintenue constante.

13. Procédé selon l'une quelconque des revendications 11 à 12, dans lequel la surface du substrat présente une résistance nulle définie sur la base de laquelle le bon fonctionnement électrique du capteur peut être établi à des fins d'auto-surveillance.
